# EUROPÄISCHE PATENTSCHRIFT

(11) **EP 0 359 912 B1**
(45) Veröffentlichungstag und Bekanntmachung des Hinweises auf die Patenterteilung: **09.03.1994**
(21) Anmeldenummer: 89110759.1
(22) Anmeldetag: 14.06.1989
(51) Int. Cl.: H02H 9/00

(54) **Explosionsgeschützte elektrische Sicherheitsbarriere**
Explosion-protected electrical safety barrier
Barrière électrique de sécurité antidéflagrante

(30) Priorität: 21.09.1988 DE 3832068
(43) Veröffentlichungstag der Anmeldung: 28.03.1990
(73) Patentinhaber: R. Stahl Schaltgeräte GmbH, D-74653 Künzelsau (DE)
(72) Erfinder: Schimmele, Anton, Dr. Ing., D-7107 Neckarsulm (DE); Bruch, Peter, Dipl.-Ing., D-7112 Waldenburg (DE)
(74) Vertreter: Rüger, Rudolf, Dr.-Ing.

(56) Entgegenhaltungen:
- DE-B- 1 111 728
- DE-C- 3 622 268
- FR-A- 2 179 151
- US-A- 4 099 216

## Beschreibung

Die Erfindung betrifft eine explosionsgeschützte elektrische Sicherheitsbarriere mit den Merkmalen des Oberbegriffes des Anspruches 1.

Bei derartigen aus der DE-PS 36 22 268 bekannten Sicherheitsbarrieren dient die am Eingang vorgesehene Sicherung dazu, in Verbindung mit den spannungsbegrenzenden Zenerdioden die Ausgangsspannung abzuschalten, wenn die Spannung am Eingang der Sicherheitsbarriere die Sperrspannung der Z-Dioden überschreitet. Denn wenn die Eingangsspannung die Z-Spannung nur wenig überschreitet, kommt ein erheblicher Stromanstieg zustande, der deutlich über dem Strom liegt, den die Sicherheitsbarriere bei der maximal zulässigen Eingangsspannung an ihren Ausgangsklemmen abgeben darf. Die Sicherung brennt daraufhin durch und schaltet die Ausgangsspannung ab. Dagegen liegt der maximale Ausgangsstrom, der im Kurzschlußfalle auftritt, bei der üblichen Dimensionierung der Sicherheitsbarrieren unter dem Auslösestrom der Schmelzsicherung, so daß sie normalerweise nur bei einer Überspannung am Eingang der Sicherheitsbarriere durchbrennt.

Wenn allerdings dieser Fall eintritt, wird die gesamte Sicherheitsbarriere unbrauchbar, da die Sicherung zusammen mit den übrigen Bauelementen der Sicherheitsbarriere unzugänglich in einem Gehäuse vergossen ist.

Es wurde deswegen, wie die FR-A-2 179 151 zeigt, in Serie mit dem Eingang der Sicherheitsbarriere eine weitere Schmelzsicherung geschalten, deren Stromauslösewert kleiner ist als der Stromauslösewert der in der Sicherheitsbarriere eingegossenen Sicherung. Hierdurch soll die vergossene Sicherung im Falle von Überspannungen gegen Durchbrennen geschützt werden, so daß durch Auswechseln der äußeren Sicherung die Einrichtung wieder in Betrieb genommen werden kann, ohne gegen die Schutzvorschriften zu verstoßen, die den Aufbau von Sicherheitsbarrieren bestimmen. Diese äußere Schutzbeschaltung der Sicherheitsbarriere mit einer weiteren Sicherung hat jedoch nicht in allen Fällen den gewünschten Schutz der in der Sicherheitsbarriere eingegossenen Sicherung bewirkt. Bei Überspannungen infolge von Leitungsinduktivitäten können trotz unterschiedlich starker Dimensionierung beider Sicherungen beide Sicherungen durchbrennen, womit die Sicherheitsbarriere insgesamt unbrauchbar wird und getauscht werden muß.

Ausgehend hiervon ist es Aufgabe der Erfindung, eine Schaltungsanordnung für eine Sicherheitsbarriere zu schaffen, bei der im normalen Fehlerfall die unzugängliche Sicherung gegen Durchbrennen geschützt ist.

Diese Aufgabe wird erfindungsgemäß durch die Schaltungsanordnung für eine Sicherheitsbarriere mit den Merkmalen des Anspruches 1 gelöst.

Die Verwendung der zweiten Sicherung gestattet es, diese zugänglich und damit austauschbar zu machen, während die erste Sicherung zur Erfüllung der Schutzvorschriften unzugänglich angeordnet ist. Es wird hierdurch möglich, die Sicherheitsbarriere ohne Verletzung der Schutzvorschriften jederzeit kostengünstig wieder instandzusetzen, wenn die zweite Sicherung zum Abschalten der Überspannung angesprochen hat. Dabei ist es noch nicht einmal notwendig, besondere Schutzmaßnahmen zu ergreifen, um das Einsetzen einer Sicherung mit einem zu hohen Stromwert zu verhindern, denn selbst wenn die Kontakte der Halterung für die zweite Sicherung direkt miteinander verbunden werden, spricht im Fehlerfalle die von außen nicht manipulierbare unzugängliche erste Sicherung an, die letztlich die Grenzkennwerte der Sicherheitsbarriere sicherstellt. Wenn die vorgeschaltete zweite Sicherung denselben Auslösestrom hat wie die erste Sicherung, wird bei gleicher Grenznennspannung der Spannungsbegrenzungseinrichtung und der Spannungsbegrenzungsschaltung die zweite Sicherung in jedem Fall von einem größeren Strom durchflossen als die erste Sicherung. Die zweite Sicherung wird also sicher vor der ersten auslösen.

Weil die Serienschaltung aus zweiter Sicherung und Spannungsbegrenzungseinrichtung als Klemmschaltung für die nachfolgende Spannungsbegrenzungsschaltung wirkt, läßt sich die Auslösecharakteristik der zweiten Sicherung in weiten Grenzen frei wählen, insbesondere kann die zweite Sicherung auch größer und träger sein als die erste.

Je nachdem, für welchen Anwendungsfall die Sicherheitsbarriere vorgesehen ist, können die Spannungsbegrenzungseinrichtung und die Spannungsbegrenzungsschaltung für unterschiedliche Polaritäten am Eingang der Sicherheitsbarriere ausgelegt sein. Die Grenzspannungsnennwerte der Spannungsbegrenzungseinrichtung und der Spannungsbegrenzungsschaltung werden dabei vorzugsweise gleich dimensioniert, können aber auch unterschiedlich sein in der Weise, daß die Spannungsbegrenzungseinrichtung auf geringere Spannungswerte begrenzt als die Spannungsbegrenzungsschaltung.

In der Zeichnung sind Ausführungsbeispiele des Gegenstandes der Erfindung dargestellt. Es zeigen:
- Fig. 1: das Blockschaltbild einer Sicherheitsbarriere,
- Fig. 2: das Schaltbild einer Sicherheitsbarriere mit von der Polarität der Eingangsspannung abhängiger Spannungsbegrenzung und
- Fig. 3: das Schaltbild einer Sicherheitsbarriere mit einer Spannungsbegrenzungscharakteristik, die von der Polarität der Eingangsspannung unabhängig ist.

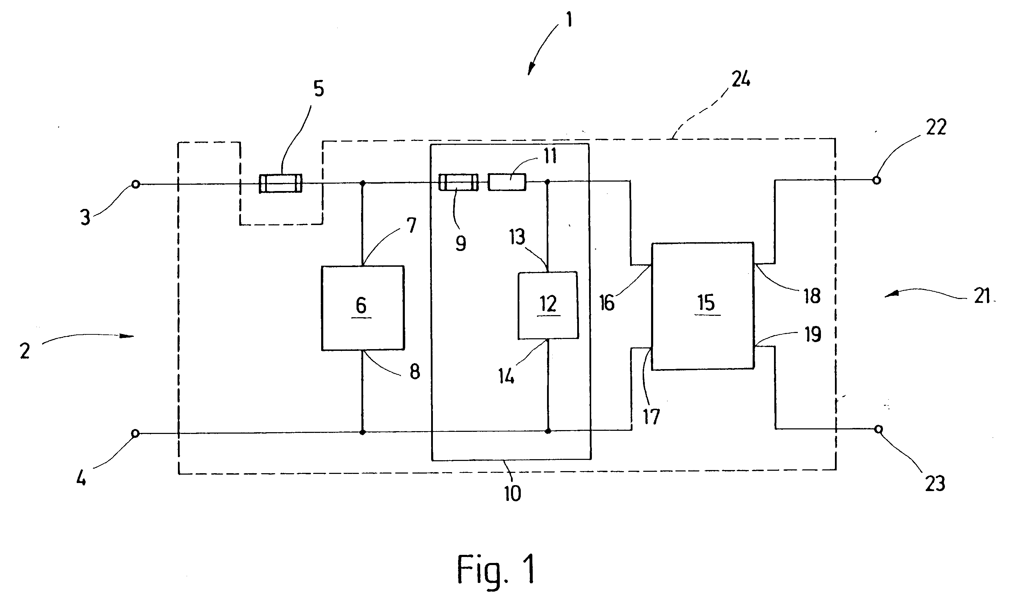

Eine in Fig. 1 dargestellte Sicherheitsbarriere 1 enthält einen Eingang 2 mit zwei Eingangsanschlüssen 3 und 4. Zu den Eingangsanschlüssen 3 und 4 liegt parallel eine Serienschaltung aus einer Schmelzsicherung 5 sowie einer Spannungsbegrenzungseinrichtung 6, wobei die Schmelzsicherung 5 mit dem Eingangsanschluß 3 und die Spannungsbegrenzungseinrichtung 6, die als Zweipol veranschaulicht ist, an dem Eingangsanschluß 4 liegt. Die Spannungsbegrenzungseinrichtung 6 zeigt zwischen ihren beiden Anschlüssen 7 und 8 einen gegen unendlich gehenden Innenwiderstand, solange die an ihren beiden Klemmen 7 und 8 anliegende Spannung kleiner als die Grenznennspannung ist, während der differentielle Innenwiderstand sehr rasch kleine Werte erreicht, sobald die Grenznennspannung geringfügig überschritten wird.

An der Spannungsbegrenzungseinrichtung 6 liegt mit ihrem Eingang eine Spannungsbegrenzungsschaltung 10. Diese Schaltung enthält eine weitere Serienschaltung, die mit den Anschlüssen 7 und 8 verbunden ist und eine weitere Sicherung 9, einen Vorwiderstand 11 und schließlich eine Spannungsbegrenzungseinrichtung 12 mit zwei Anschlüssen 13 und 14 aufweist. Die Spannungsbegrenzungseinrichtung 12 zeigt vorzugsweise zumindest qualitativ dieselbe Übertragungseigenschaft wie die Spannungsbegrenzungseinrichtung 6. Vorzugsweise haben jedoch beide Spannungsbegrenzungseinrichtungen 6 und 12 dieselben Kennwerte, also insbesondere dieselbe Grenznennspannung, bei deren Überschreiten der differentielle Innenwiderstand expontentiell kleine gegen null gehende Werte erreicht.

Der Spannungsbegrenzungsschaltung 10 folgt schließlich eine Strombegrenzungsschaltung 15. Die Strombegrenzungseinrichtung 15 ist mit ihren Eingangsanschlüssen 16 und 17 zu der Spannungsbegrenzungseinrichtung 12 parallelgeschaltet, während ihre Ausgangsanschlüsse 18 und 19 mit zwei einen Ausgang 21 der Sicherheitsbarriere 1 bildenden Ausgangsanschlüssen 22 und 23 in Verbindung stehen. Die Strombegrenzungseinrichtung 15 hat den Zweck, im Falle eines Kurzschlusses zwischen den beiden Ausgangsanschlüssen 22 und 23 den bei der maximal zulässigen Eingangsspannung an dem Eingang 2 der Sicherheitsbarriere 1 fließenden Kurzschlußstrom auf den nach dem Explosionsschutz maximal zulässigen Wert zu begrenzen. Hierzu enthält die Strombegrenzungseinrichtung 15 im einfachsten Falle einen Längswiderstand zwischen den Anschlüssen 16 und 18, wie dies die nachfolgenden Ausführungsbeispiele zeigen, während die Anschlüsse 17 und 19 direkt durchverbunden sind oder sie enthält eine elektronische Begrenzungsregelung mit Hilfe von Transistoren, wie sie beispielsweise in der DE-PS 36 22 268 gezeigt sind.

Wie durch eine gestrichelte Linie 24 angedeutet, sind bei der neuen Sicherheitsbarriere 1, abgesehen von den Eingangsanschlüssen 3, 4, den Ausgangsanschlüssen 22 und 23 sowie der Sicherung 5 alle übrigen Bauelemente in einem Gehäuse von außen unzugänglich verschlossen. Lediglich die Sicherung 5 kann im Bedarfsfalle von außen her ausgewechselt werden, wozu in dem Gehäuse der Barriere 1 entsprechende Kontakt- und Halterungsvorrichtungen vorgesehen sind, die bekannt und deswegen im einzelnen nicht dargestellt sind. Es ist auch möglich, die Serienschaltung aus der Sicherung 5 und der Spannungsbegrenzungseinrichtung 6 oder nur die Sicherung 5 vollständig außerhalb des Gehäuses 24 anzuordnen.

Wenn bei der insoweit beschriebenen Sicherheitsbarriere 1 an dem Eingang 2 eine Spannung anliegt, die kleiner ist als die Grenznennspannung der beiden Spannungsbegrenzungseinrichtungen 6 und 12, ist die Ausgangsspannung gleich der Eingangsspannung, lediglich vermindert um den Spannungsabfall an dem Vorwiderstand 11 und einem eventuellen Spannungsabfall an der Strombegrenzungseinrichtung 15. Die Spannungsbegrenzungseinrichtungen 6 und 12 beeinflussen die Spannung an dem Ausgang 21 nicht. Sollte nun infolge eines Fehlers der an die Sicherheitsbarriere 1 angeschlossenen Stromversorgung die Spannung an dem Eingang 2 über die Grenznennspannung der Spannungsbegrenzungseinrichtung 6 ansteigen, kann dennoch die Spannung an dem Ausgang 21 nur bis auf einen Wert ansteigen, der der jeweiligen Begrenzungsspannung der Spannungsbegrenzungseinrichtung 6 bzw. 12 entspricht. Gleichzeitig wird infolge der Begrenzungswirkung der Strom in den Eingang 2 über den Auslösestrom der Schmelzsicherung 5 ansteigen, die daraufhin durchbrennt.

Weil die Spannungsbegrenzungseinrichtung 12 denselben oder einen höheren Wert der Grenznennspannung aufweist wie die Spannungsbegrenzungseinrichtung 6, wird der durch eine Überspannung hervorgerufene größere Strom an der Eingangsseite der Sicherheitsbarriere 1 nur oder überwiegend durch die Spannungsbegrenzungseinrichtung 6 fließen, während die Spannungsbegrenzungseinrichtung 12 einen wesentlich geringeren oder keinen Strom führt, womit in der Folge kein auslösender Strom über die Sicherung 9 fließt. Auch wenn die Toleranzen der Grenznennspannungen der Spannungsbegrenzungseinrichtungen 6 und 12 ungünstig liegen, verhindert der Vorwiderstand 11 und/oder der Innenwiderstand der Sicherung 9 ein Durchbrennen der Sicherung 9. Im Fehlerfall wird deswegen nur die von außen zugängliche und auswechselbare Sicherung 5 durchbrennen, während die Sicherung 9 unbeschädigt bleibt. Selbst dann, wenn beim Durchbrennen der Sicherung 5 Induktionsspannungen an dem Eingang 2 infolge der Induktivität der zu dem Eingang 2 führenden Leitungen auftreten, wird die nach den Schutzvorschriften unbedingt erforderliche unzugängliche Sicherung 9 wirksam geschützt. Nur im Falle eines Versagens der Schutzwirkung durch die Sicherung 5 und die Spannungsbegrenzungseinrichtung 6 spricht die Sicherung 9 an. Ein solches Versagen kann beispielsweise auftreten, wenn die Spannungsbegrenzungseinrichtung 6 eine Leitungsunterbrechung hat. Im normalen Fehlerfall, d.h. einwandfrei arbeitender Sicherheitsbarriere 1, wirkt die erste Spannungsbegrenzungseinrichtung 6 als Klemmschaltung für die nachfolgende Serienschaltung aus Spannungsbegrenzungseinrichtung 12, Schutzwiderstand 11 und Sicherung 9.

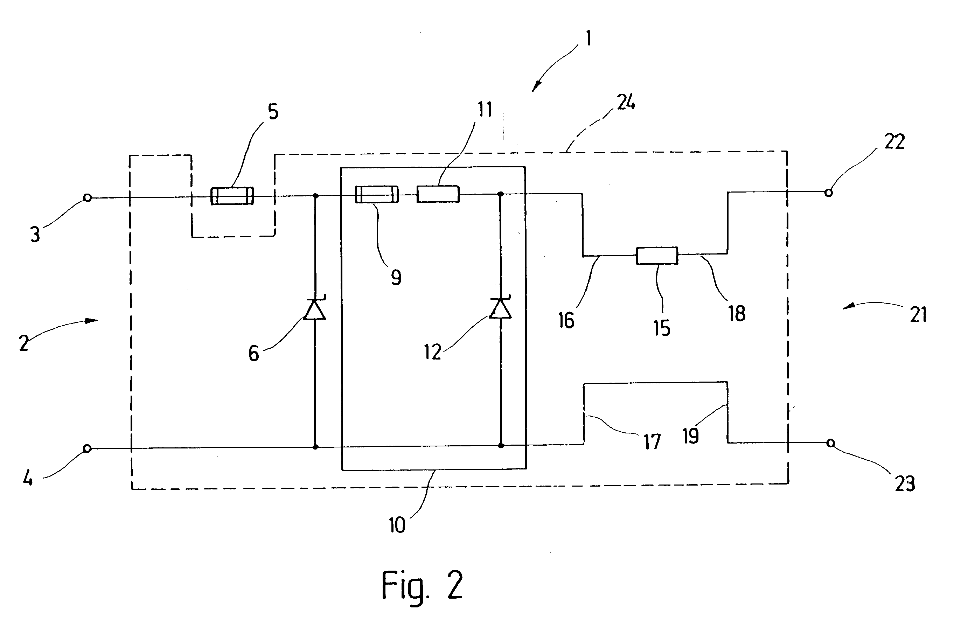

Wie die Fig. 2 zeigt, können die beiden Spannungsbegrenzungseinrichtungen 6 und 12 im einfachsten Falle von zwei Z-Dioden 6 und 12 gebildet sein, die in der gleichen Richtung gepolt sind, also beispielsweise beide mit ihrer Anode an dem Eingangsanschluß 4 liegen. Die Z-Dioden zeigen die oben erwähnte Kennlinie. Die Z-Diode 12 kann auch aus mehreren parallelgeschalteten Z-Dioden gebildet sein, wie dies aus Gründen der Schutzvorschriften üblich ist.

Die Strombegrenzungsschaltung 15 reduziert sich bei der gezeigten einfachen Form der Sicherheitsbarriere zu dem Längswiderstand 15, der die Verbindungsstelle aus dem Schutzwiderstand 11 und der Kathode der Z-Diode 12 mit dem Ausgangsanschluß 22 verbindet.

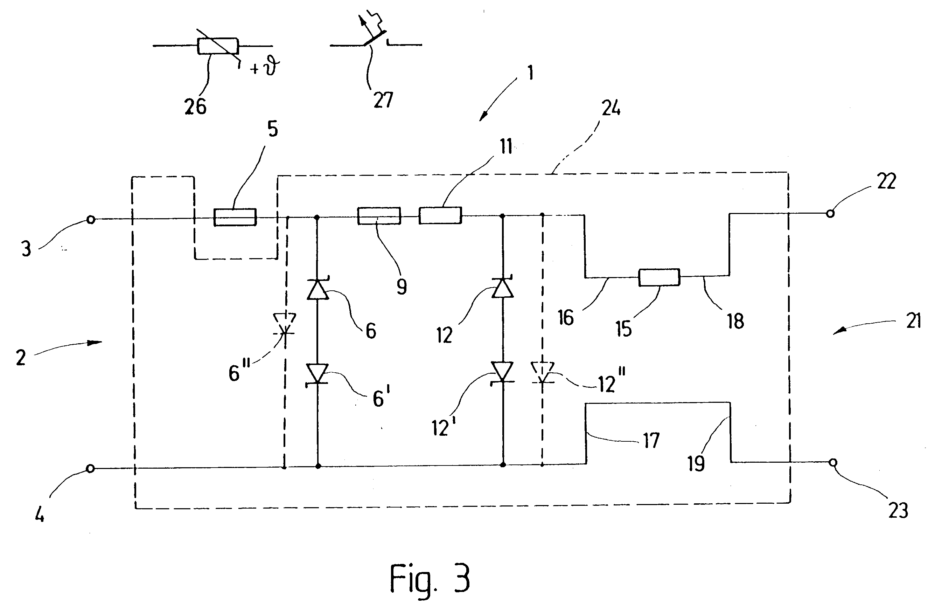

Wenn mit der Sicherheitsbarriere 1 Wechselspannungen und Wechselströme auf zulässige sichere Werte begrenzt werden sollen, wird, wie Fig. 3 zeigt, zu der Z-Diode 6 eine weitere Z-Diode 6′ in Serie geschaltet, und zwar mit umgekehrter Polarität. Eine entsprechende Ergänzung wird bei der Z-Diode 12 durch die Z-Diode 12′ vorgesehen, wodurch unabhängig von der Polarität der Spannung an dem Eingang 2 der Betrag der Spannung, auf den die beiden in Serie geschalteten Z-Dioden 6, 6′ bzw. 12, 12′ begrenzen, gleich ist.

Bei extrem kleinen Spannungen werden zur Spannungsbegrenzungen normale Gleichrichterdioden verwendet, die in Durchlaßrichtung betrieben werden.

Wie ferner Fig. 3 zeigt, kann anstelle der Schmelzsicherung 5 auch ein Kaltleiter 26 eingesetzt werden, wie er in der Figur veranschaulicht ist. Beim Auftreten einer Überspannung an dem Eingang 2 erwärmt sich der Kaltleiter 26 und begrenzt so den in die dahinter befindliche Schaltung fließenden Strom auf Werte, der weder für die Z-Diode 6, 6′ noch für die Schmelzsicherung 9 gefährlich wird. Beim Verschwinden der Überspannung und dem Unterschreiten des Haltestroms geht die Schaltungsanordnung mit dem Kaltleiter 26 anstelle der Schmelzsicherung 5 selbsttätig in den normalen Betriebszustand über.

Wenn beim Auftreten einer Überspannung ein bleibendes Abschalten erreicht werden soll, wird anstelle der Schmelzsicherung 5 ein ebenfalls in Fig. 3 veranschaulichter elektromechanischer Überstromschalter 27 verwendet. Dieser wirkt in der gleichen Weise wie die Schmelzsicherung 5, kann jedoch nach dem Verschwinden der Überspannung von Hand erneut eingeschaltet werden, um die Sicherheitsbarriere 1 wieder in Betrieb zu nehmen.

## Patentansprüche

1. Schaltungsanordnung für eine Sicherheitsbarriere (1) zum Begrenzen von Strom und Spannung an einer in einen explosionsgefährdeten Bereich laufenden Zweidrahtleitung, mit einem zwei Eingangsanschlüsse (3, 4) aufweisenden Eingang (2), an dem eine Spannungsquelle anschließbar ist, einem zwei Ausgangsanschlüsse (22, 23) aufweisenden Ausgang (21), der mit der Zweidrahtleitung verbunden ist, einer an den Eingangsanschlüssen (3, 4) angeschalteten und eine erste Sicherung (9) und eine erste Spannungsbegrenzungseinrichtung (12) enthaltende erste Spannungsbegrenzungsschaltung (10), deren Ausgang mit einer Strombegrenzungsschaltung (15) verbunden ist, über die der Ausgang der Spannungsbegrenzungsschaltung (10) mit den Ausgangsklemmen (22, 23) verbunden ist, wobei zumindest einige Teile der Schaltungsanordnung unzugänglich in einem Gehäuse gekapselt sind, dadurch gekennzeichnet, daß zwischen dem Eingang (2) und der ersten Spannungsbegrenzungsschaltung (10) eine Schaltung aus einer zweiten Sicherung (5, 26, 27) und einer zweiten Spannungsbegrenzungseinrichtung (6), die eine einer Z-Diode ähnliche Charakteristik aufweist, liegt, daß die erste Spannungsbegrenzungsschaltung (10) eingangsseitig parallel zu der zweiten Spannungsbegrenzungseinrichtung (6) geschaltet ist und über die zweite Sicherung (5) mit dem Eingang (2) verbunden ist und daß zumindest die zweite Sicherung (5, 26, 27) zugänglich ist.

2. Schaltungsanordnung nach Anspruch 1, dadurch gekennzeichnet, daß die zweite Spannungsbegrenzungseinrichtung (6) und die erste Spannungsbegrenzungseinrichtung (12) bei zumindest einer Polarität der Spannung an den Eingangsanschlüssen (3, 4) bis auf Toleranzen diesselbe Grenznennspannung aufweisen, auf die sie die an ihnen anliegende Spannung begrenzen.

3. Schaltungsanordnung nach Anspruch 1, dadurch gekennzeichnet, daß die zweite Spannungsbegrenzungseinrichtung (6) und die erste Spannungsbegrenzungseinrichtung (12) bei einer Polarität der Spannung an den Eingangsanschlüssen (3, 4) eine höhere Grenznennspannung aufweisen als bei der anderen Polarität.

4. Schaltungsanordnung nach Anspruch 1, dadurch gekennzeichnet, daß die zweite Spannungsbegrenzungseinrichtung (6) und die erste Spannungsbegrenzungseinrichtung (12) unabhängig von der Polarität der Spannung an den Eingangsanschlüssen (3, 4) die gleiche Grenznennspannung aufweisen.

5. Schaltungsanordnung nach Anspruch 1, dadurch gekennzeichnet, daß die zweite Sicherung von einem Kaltleiter (26) gebildet ist.

6. Schaltungsanordnung nach Anspruch 1, dadurch gekennzeichnet, daß beide Sicherungen (5, 9) Schmelzsicherungen sind.

7. Schaltungsanordnung nach Anspruch 1, dadurch gekennzeichnet, daß die zweite Sicherung von einem elektromechanischem Überstromschalter (27) gebildet ist.

8. Schaltungsanordnung nach Anspruch 1, dadurch gekennzeichnet, daß beide Sicherungen (5, 9, 26, 27) dieselben elektrischen Auslösewerte aufweisen.

9. Schaltungsanordnung nach Anspruch 1, dadurch gekennzeichnet, daß der Auslösestrom der zweiten Sicherung (5, 26, 27) größer als der der ersten Sicherung (9) ist.

10. Schaltungsanordnung nach Anspruch 1, dadurch gekennzeichnet, daß die zweite Sicherung (5, 26, 27) träger als die erste Sicherung (9) ist.

11. Schaltungsanordnung nach Anspruch 1, dadurch gekennzeichnet, daß die zweite Spannungsbegrenzungseinrichtung (6) auf einen Spannungswert begrenzt, der kleiner ist als die größte Spannung, bei der die erste Sicherung (9) gerade nicht auslöst.

12. Schaltungsanordnung nach Anspruch 1, dadurch gekennzeichnet, daß zur Spannungsbegrenzung die Spannungsbegrenzungseinrichtung und/oder die Spannungsbegrenzungsschaltung (10) jeweils wenigstens eine Z-Diode (6, 6', 12, 12') oder eine Diode (6'', 12'') enthalten.

13. Schaltungsanordnung nach Anspruch 1, dadurch gekennzeichnet, daß die zweite Sicherung (5, 26, 27) und/oder die zweite Spannungsbegrenzungseinrichtung (6) außerhalb des Gehäuses angeordnet sind.

## Claims

1. Circuit arrangement for a safety barrier (1) for limiting the current and voltage at a two-wire conductor running in an explosion risk area, having an input (2) with two input terminals (3, 4), to which a voltage source may be connected, an output (21) with two output terminals (22, 23), which is connected to said two-wire conductor, a first voltage limiter circuit (10) connected to said input terminals (3, 4) and comprising a first safety fuse (9) and a first voltage limiter means (12), the output of which is connected to a current limiter circuit (15), via which the output of said voltage limiter circuit (10) is connected to said output terminals (22, 23), wherein at least some parts of said circuit arrangement are enclosed without access in a casing, characterised in that a circuit comprising a second safety fuse (5, 26, 27) and a second voltage limiter means (6), which has a characteristic similar to that of a Zener diode, is arranged between said input (2) and said first voltage limiter circuit (10); that the input side of said first voltage limiter circuit (10) is connected across said second voltage limiter means (6) and is connected via said second safetey fuse (5) to said input (2); and that at least said second safety fuse (5, 26, 27) is accessible.

2. Circuit arrangement according to Claim 1, characterised in that in the case of at least one polarity of the voltage at the input terminals (3, 4), the second voltage limiter means (6) and the first voltage limiter means (12) have the same treshold voltage, to which they limit their applied voltage.

3. Circuit arrangement according to Claim 1, characterised in that the second voltage limiter means (6) and the first voltage limiter means (12) have a higher threshold voltage in the case of one polarity of the voltage at the input terminals (3, 4) than of the other polarity.

4. Circuit arrangement according to Claim 1, characterised in that the second voltage limiter means (6) and the first voltage limiter means (12) have the same threshold voltage irrespective of the polarity of the voltage at the input terminals (3, 4).

5. Circuit arrangement according to Claim 1, characterised in that the second safety fuse is formed by a PTC resistor (26).

6. Circuit arrangement according to Claim 1, characterised in that both safety fuses (5, 9) are safety cut-outs.

7. Circuit arrangement according to Claim 1, characterised in that the second safety fuse is formed by an electromechanical overload circuit breaker (27).

8. Circuit arrangement according to Claim 1, characterised in that both safety fuses (5, 9, 26, 27) have the same electrical release values.

9. Circuit arrangement according to Claim 1, characterised in that the release current of the second safety fuse (5, 26, 27) is higher than that of the first safety fuse (9).

10. Circuit arrangement according to Claim 1, characterised in that the second safety fuse (5, 26, 27) is slower to act than the first safety fuse (9).

11. Circuit arrangement according to Claim 1, characterised in that the second voltage limiter means (6) limits the voltage to a value below the highest voltage, at which the first safety fuse (9) is not immediately released.

12. Circuit arrangement according to Claim 1, characterised in that to limit voltage, the voltage limiter means and/or the voltage limiter circuit (10) each comprise at least one Zener diode (6, 6', 12, 12') or one diode (6'', 12'').

13. Circuit arrangement according to Claim 1, characterised in that the second safety fuse (5, 26, 27) and/or the second voltage limiter means (6) is/are arranged outside the casing.

## Revendications

1. Agencement de circuit pour un barrage de sécurité (1) destiné à limiter le courant et la tension dans une ligne à deux conducteurs traversant une zone à atmosphère explosible, comportant une entrée (2) avec deux bornes d'entrée (3, 4), à laquelle peut être raccordée une source de tension, une sortie (21) avec deux bornes de sortie (22, 23) qui est raccordée à la ligne à deux conducteurs, un premier circuit limiteur de tension (10) qui est connecté à l'une des bornes d'entrée (3, 4), comprend un premier coupe-circuit (9) et un premier dispositif (12) de limitation de tension et dont la sortie est connectée à un circuit limiteur de tension (15) par l'intermédiaire duquel la sortie du circuit limiteur de tension (10) est connectée aux bornes de sortie (22, 23), certaines parties au moins du circuit étant encapsulées dans un boîtier de manière à les rendre inaccessibles, caractérisé par le fait qu'un circuit composé d'un deuxième coupe-circuit (5, 26, 27) et d'un deuxième dispositif de limitation de tension (6) dont la caractéristique est semblable à celle d'une diode Zener est disposé entre l'entrée (2) et le premier circuit limiteur de tension (10), par le fait que le premier circuit limiteur de tension (10), côté entrée, est branché en parallèle avec le deuxième dispositif de limitation de tension (6) et est connecté à l'entrée (2) par l'intermédiaire du deuxième coupe-circuit (5) et par le fait que le deuxième coupe-circuit (5, 26, 27) au moins est accessible.

2. Agencement de circuit selon la revendication 1, caractérisé par le fait que, pour au moins une polarité de la tension appliquée aux bornes d'entrée (3, 4), le deuxième dispositif de limitation de tension (6) et le premier dispositif de limitation de tension (12) présentent, aux tolérances près, la même tension nominale limite à partir de laquelle ils limitent la tension qui leur est appliquée.

3. Agencement de circuit selon la revendication 1, caractérisé par le fait que, pour une polarité de la tension appliquée aux bornes d'entrée (3, 4), le deuxième dispositif de limitation de tension (6) et le premier dispositif de limitation de tension (12) présentent une tension nominale limite plus élevée que pour l'autre polarité.

4. Agencement de circuit selon la revendication 1, caractérisé par le fait que, quelle que soit la polarité de la tension appliquée aux bornes d'entrée (3, 4), le deuxième dispositif de limitation de tension (6) et le premier dispositif de limitation de tension (12) présentent la même tension nominale limite.

5. Agencement de circuit selon la revendication 1, caractérisé par le fait que le deuxième coupe-circuit est constitué par un conducteur à froid (26).

6. Agencement de circuit selon la revendication 1, caractérisé par le fait que les deux coupe-circuits (5, 9) sont des fusibles.

7. Agencement de circuit selon la revendication 1, caractérisé par le fait que le deuxième coupe-circuit est constitué par un déclencheur électro-mécanique à surintensité (27).

8. Agencement de circuit selon la revendication 1, caractérisé par le fait que les deux coupe-circuits (5, 9, 26, 27) présentent les mêmes valeurs électriques de déclenchement.

9. Agencement de circuit selon la revendication 1, caractérisé par le fait que, le courant de déclenchement du deuxième coupe-circuit (5, 26, 27) est supérieur à celui du premier coupe-circuit (9).

10. Agencement de circuit selon la revendication 1, caractérisé par le fait que le deuxième coupe-circuit (5, 26, 27) a une inertie plus grande que le premier coupe-circuit (9).

11. Agencement de circuit selon la revendication 1, caractérisé par le fait que le deuxième dispositif de limitation de tension (6) a limite la tension à une valeur qui est inférieure à la tension maximale pour laquelle le premier coupe-circuit (9) ne déclenche pas.

12. Agencement de circuit selon la revendication 1, caractérisé par le fait que, pour limiter la tension, le dispositif de limitation de tension et/ou le circuit limiteur de tension (10) comporte(nt) chacun au moins une diode Zener (6, 6', 12, 12') ou une diode (6'', 12'').

13. Agencement de circuit selon la revendication 1, caractérisé par le fait que le deuxième coupe-circuit (5, 26, 27) et/ou le deuxième dispositif de limitation de tension (6) sont disposés à l'extérieur du boîtier.
